(19) Europäisches Patentamt
European Patent Office
Office européen des brevets

(11) **EP 3 094 659 B1**

(12) **EUROPEAN PATENT SPECIFICATION**

(45) Date of publication and mention
of the grant of the patent:
**28.07.2021  Bulletin 2021/30**

(51) Int Cl.:
***C08F 4/02*** *(2006.01)*

(21) Application number: **14821102.2**

(22) Date of filing: **15.12.2014**

(86) International application number:
**PCT/EP2014/077681**

(87) International publication number:
**WO 2015/091316 (25.06.2015 Gazette 2015/25)**

(54) **PROCESS FOR THE PREPARATION OF A SPHERICAL SUPPORT COMPRISING MGCL2 AND ALCOHOL**

VERFAHREN ZUR HERSTELLUNG EINES KUGELFÖRMIGEN TRÄGERS MIT MGCL2 UND ALKOHOL

PROCÉDÉ POUR LA PRÉPARATION D'UN SUPPORT SPHÉRIQUE COMPRENANT DU MGCL2 ET DE L'ALCOOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2013  EP 13198335**

(43) Date of publication of application:
**23.11.2016  Bulletin 2016/47**

(73) Proprietor: **Basell Poliolefine Italia S.r.l.**
**20121 Milano (IT)**

(72) Inventors:
 • **ALGOZZINI, Giuseppina Maria**
  **I-44122 Ferrara (IT)**
 • **ARICH DE FINETTI, Nicolò**
  **I-44122 Ferrara (IT)**
 • **DI DIEGO, Maria**
  **I-44122 Ferrara (IT)**
 • **FAIT, Anna**
  **I-44121 Ferrara (IT)**
 • **RANZANI, Luca**
  **I-44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-98/44009      WO-A1-2005/039745**
**US-A1- 2006 003 888      US-A1- 2009 188 304**

 • **None**

**EP 3 094 659 B1**

**Description**

FIELD OF THE INVENTION

The present disclosure relates to a process for preparing a support, in the form of spherical particles with narrow particle size distribution, which can be used in the preparation of olefin polymerization supported catalysts. In particular, the present invention relates to a process for preparing the said support, which involves forming an emulsion of a liquid molten adduct of magnesium dihalide and an alcohol with an immiscible liquid by feeding the said liquids to a Couette type device generating a shear stress constant throughout the flow domain. This process gives support particles capable to generate catalysts that in turn give polymers in higher yields and/or with a better morphology.

BACKGROUND OF THE INVENTION

The availability of catalysts able to produce polymers with optimal morphology properties is a fundamental requirement in any olefin polymerization technology. A polymer having a spherical regular form allows to get high bulk density and efficient transport within the various sections of the plant. In addition, a narrow polymer particle size distribution, allows a easier handling of the polymer transfer minimizing the problems due to presence of excessively big or small particles. In view of the replica phenomena, by which under controlled polymerization conditions the morphological properties of a catalyst are transferred on a magnified scale to the polymer, the requirements of regular morphology and narrow particle size distribution are transferred to the catalyst.

In the field of olefin polymerization, Ziegler/Natta catalyst components are customarily used in the industrial polymerization process. They usually comprise a titanium compound supported on magnesium chloride in active form and, when stereospecificity is requested, they also comprise an electron-donating compound. In the polymerization process they are used together with an organo aluminum compound as co-catalyst activator and, when needed, also in combination with an additional stereomodulating agent (external electron donor). In order to impart the good morphological properties the supports comprising $MgCl_2$ can be prepared by many different processes. Some of these comprise the formation of a molten adduct of magnesium chloride and a Lewis base, usually an alcohol, followed by spraying in an atmosphere at low temperature (spray-cooling) so as to solidify the adduct.

Another general method widely used in the preparation of spherical supports containing $MgCl_2$ consists in melting the adduct described previously, with stirring, in a liquid medium in which the adduct is immiscible, and transferring the mixture into a cooling bath containing a liquid at low temperature, in which the adduct is insoluble, which is capable of bringing about rapid solidification of the adduct in the form of spherical particles.

While the spherical form is due to the formation of droplets of the dispersed phase of the emulsion into the continuous phase, the particle size is function of the energy provided to the emulsion system and, maintaining constant all the other features (shape of the tank and stirrer, type of oil) is inversely related to the intensity of stirring. Thus, in order to produce precursor with reduced particle size, higher amount of energy, in particular higher stirring, are usually provided. Under these conditions it is difficult to obtain also narrow particle size distribution because with the reduction of size usually the coalescence phenomena increase.

An example is well described in WO2005/039745, regarding a method for preparing the magnesium chloride/ethanol adduct comprising subjecting at least two immiscible liquids to a sequence of at least two mixing stages carried out in at least two successive stator-rotor devices, wherein a peripheral outlet from a first stator rotor device is connected to an axial inlet in the successive stator-rotor device by means of a duct in which the Reynold number ReT inside said duct is higher than 5000, and the peripheral velocity of each rotor of said stator-rotor devices ranges from 5 to 60 m/s.

Due to the rotor/stator configuration and rotation speed the shear stress imparted to the system is largely not constant causing, in a single rotor/stator stage, a broad particle size distribution as evidenced by the results obtained in comparative example 1. According to this document is therefore necessary to add additional stages (at least one but preferably two) in order to generate a more uniform system and narrowing the particle size distribution. This involves however a complication of the process, and thus it would be advisable to find an easier way to have available catalyst precursors with narrow particle size distribution over a broad range of average particle size.

Devices capable to generate emulsions by applying a more constant shear stress are known in the art. US7,581,436, corresponding to US2009/188304, describes a method for operating a Couette device in order to prepare and study emulsions. A Couette device is an apparatus comprising two concentric cylinders rotating at different angular velocity. A peculiar characteristic of this model is that shear stress is constant throughout the flow domain. However, according to Grace (Chemical Engineering Communications 14, 225-277) such system are effective only when the viscosity of the two phases of the emulsion are similar. In cases of very low or high viscosity ratios it becomes several hundred times more difficult to break a drop by uniform rotational shear. US7,581,436 implicitly confirms this finding because notwithstanding mentioning a wide applicability limits the working examples to emulsions composed by crude oil and water which have viscosity quite in the same range.

## SUMMARY OF THE INVENTION

In view of the above, it has been surprising to discover that a Couette device could be very effective in the preparation of emulsions of magnesium dichloride/ethanol adduct in an immiscible liquid hydrocarbon because of their very different viscosities and therefore of the very high viscosity ratio.

It is therefore an object of the present disclosure a process for preparing a $MgCl_2$-alcohol adduct comprising (a) forming a mixture of an $MgCl_2$-alcohol adduct in molten form and a liquid which is immiscible with the said adduct, (b) subjecting the mixture to a shear stress in order to obtain an emulsion, and (c) rapidly cooling the emulsion to solidify the disperse phase and collecting the solid adduct particles, said process being characterized by the fact that step (b) is carried out in a device generating a shear stress constant through the flow domain and comprising a first outer and second inner cylindrical members that define an annulus between them, wherein at least one of said cylindrical members rotate with respect to the other.

## DETAILED DESCRIPTION OF THE INVENTION

According to a preferred aspect of the invention the device comprising a first outer and second inner cylindrical members that define an annulus between them, wherein at least one of said cylindrical members rotate with respect to the other, is a Couette type device. Examples of Couette devices are described in US 6,959,588 and US5,959,194. In a preferred embodiment the first outer cylinder is stationery while the second internal cylinder is the rotary one.

Generally, the Reynolds number (Re) and the shear coefficient (SH) related to the movement of the emulsion inside the Couette device are defined by the following formulas: $Re = \delta * u * h / \mu$ and

$$SH = u/h$$

where u is the peripheral speed of the rotor at the rotor surface (radius $r_i$), h is the anular gap width between the inner cylinder (radius ri) and the outer cylinder (radius $r_o$), $\delta$ and $\mu$ are the density and the viscosity of the emulsion respectively. This latter is calculated on the basis of a version of the Taylor model defined in equation 13 of Rheology of emulsions - Derkach SR.- Adv Colloid Interface Sci. 2009 Oct 30;151(1-2):1-23. doi: 10.1016/j.cis.2009.07.001. *Epub 2009 Jul 10*, relating to the study of rheological behavior of adduct concentrated emulsions and their concentration dependence of viscosity.

In general, with the increase of the gap, Re increases while the SH rate decreases.

Although depending on the scale of the device certain parameters may vary, in one preferred embodiment the radial tolerance between the surfaces of the cylinders, intended as the radial difference between the circumference of each cylinder ranges from 0.1 up to 20 mm, preferably from 0.2 to 5 mm, while the rotor diameter ranges from 20 mm up to 600 mm, preferably from 80 to 200mm.

Under this setup, the rotary cylinder is preferably rotated at a velocity in the range from 200 to 8000 rpm, preferably from 600 to 5000 rpm.

Generally the Reynolds number may range from 300 to 400000 more typically in the range from 500 to 10000.

The liquid medium used in stage (a) can be any liquid medium which is inert with respect to, and substantially immiscible with the $MgCl_2$ alcohol adduct. Preferably, it is an organic liquid medium in particular selected from the group consisting of aliphatic and aromatic hydrocarbons, silicone oils, liquid polymers or mixtures of the said compounds. Particularly preferred liquid media are paraffin oils and silicone oils having a viscosity of greater than 15 cPoise at room temperature and preferably between 22 and 270cPoise.

The $MgCl_2$-alcohol adduct is prepared by contacting $MgCl_2$ and alcohol, heating the system at the melting temperature of $MgCl_2$-alcohol adduct or above, and maintaining said conditions so as to obtain a completely melted adduct. In particular, the adduct is preferably kept at a temperature equal to or higher than its melting temperature, under stirring conditions, for a time period equal to or greater than 2 hours, 2 to 50 hours and more preferably from 5 to 40 hours.

The alcohol forming the adduct with the $MgCl_2$ is preferably selected from the alcohols of formula ROH in which R is an alkyl group containing from 1 to 10 carbon atoms. Preferably, R is a $C_1$-$C_4$ alkyl and most preferably ethyl. The use of $MgCl_2$ as a Mg dihalide is preferred.

Especially preferred adducts are those of formula $MgCl_2 \cdot mROH \cdot nH_2O$ in which m ranges from 0.1 to 6, n ranges from 0 to 0.7 and R has the meaning given above. Among them the adducts particularly preferred are those in which m ranges from 2 to 4, n ranges from 0 to 0.4 and R is ethyl.

The viscosity of the adduct preferably ranges from 20 to 200cP at 125°C more preferably from 50 to 100 cP at 125°C.

The relative feeding weight ratio of liquid immiscible medium to of molten adduct ranges from 3.5 to 8.

It is be clear to a person skilled in the art that the formation of the emulsion, its stability and characteristics is the result of the combination of several parameters which may be selected as necessary. In particular, it will be possible to vary both the specific parameters of the emulsion (density, viscosity and thus also the type of continuous phase) and the operating parameters such as the type and dimensions of Couette device, the velocity of rotating cylinder and the temperature of the system. The selection of these parameters allows the skilled in the art to work under the desired flow conditions that can generate solid adduct particles with different average size and/or particle size distribution.

As mentioned above, the formed emulsion is then transferred into the cooling bath. The transfer is preferably carried out under pressure, by using a pipe connected at one end with the cooling bath. The diameter of said pipe is such that the Reynolds number in the pipe ($Re_T$) is ranging from 500 up to 20000.

The pipe length to connect step a) and b) may be varied within a wide range, bearing in mind, the operating limits caused, on the one hand, by the substantial pressure drops and, on the other hand, by the compactness of the plant. It is also possible to use more than one transfer pipes able having same or different diameters.

For the purpose of the present disclosure with the term regular or spherical morphology is meant particles having a ratio between maximum diameter and minimum diameter of less than 1.5 and preferably of less than 1.3.

As mentioned previously, the emulsion is then solidified in the cooling step (b). The cooling step is preferably carried out by immersing one of the ends of the transfer pipe containing the emulsion in the cooling bath wherein the cooling liquid is preferably moving inside a tubular zone. According to the present invention the term "tubular zone" has the ordinary meaning of a zone having the form of a tube. Particularly preferred examples of such zones are pipes or tubular reactors. On coming into contact with the low-temperature liquid, the emulsion containing the droplets of the molten adduct is cooled, bringing about solidification of the droplets in solid particles, which can then be collected for example by means of centrifugation or filtration. The cooling liquid may be any liquid which is inert with respect to the adduct and in which the adduct is substantially insoluble. For example, this liquid can be selected from the group consisting of aliphatic and aromatic hydrocarbons. Preferred compounds are aliphatic hydrocarbons containing from 4 to 12 carbon atoms and in particular hexane and heptane. A cooling liquid temperature of between -20°C and 20°C gives satisfactory results in terms of rapid solidification of the droplets. In the case of the adduct $MgCl_2 \cdot nEtOH$, in which n is between 2 and 4, the cooling liquid temperature is preferably between -10°C and 20°C and more preferably between -5°C and 15°C.

As explained before, the process of the present invention generates support particles with particle size distribution (SPAN) less than 1.4, preferably less than 1.2 and preferably ranging from 0.7 to 1.0.

The particle size distribution (SPAN) is calculated with the formula $\dfrac{P90 - P10}{P50}$ wherein P90 is the value of the diameter such that 90% of the total volume of particles have a diameter lower than that value; P10 is the value of the diameter such that 10% of the total volume of particles have a diameter lower than that value and P50 is the value of the diameter such that 50% of the total volume of particles have a diameter lower than that value.

The supports prepared by the process of the present invention are particularly suitable for preparing catalytic components for the polymerization of olefins. The said catalyst components are obtainable by reacting a transition metal compound of formula $MP_x$, in which P is a ligand that is coordinated to the metal and x is the valence of the metal M which is an atom selected from the Groups 3 to 11 or the lanthanide or actinide groups of the Periodic Table of the Elements (new IUPAC version), with the supports of the invention. Particularly preferred transition metal compounds are Ti and V halides, alcoholates or haloalcoholates.

In a preferred embodiment, the adduct can be directly reacted with the Ti compound or it can be previously subjected to thermal controlled dealcoholation (80-130°C) so as to obtain an adduct in which the number of moles of alcohol is generally lower than 3 preferably between 0,1 and 2,5. The reaction with the Ti compound, preferably $TiCl_4$, can be carried out by suspending the adduct (dealcoholated or as such) in cold $TiCl_4$ (generally 0°C); the mixture is heated up to 80-130°C and kept at this temperature for 0,5-2 hours. The treatment with $TiCl_4$ can be carried out one or more times. The maleate can be added during the treatment with $TiCl_4$. The treatment with the electron donor compound can be repeated one or more times.

The preparation of catalyst components in spherical form is described for example in European Patent Applications EP-A-395083, EP-A-553805, EP-A-553806, EPA-601525 and WO98/44009.

The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$ preferably between 0.2 and 0.6 $cm^3/g$. The porosity (Hg method) due to pores with radius up to 10.000Å generally ranges from 0.3 to 1.5 $cm^3/g$, preferably from 0.45 to 1 $cm^3/g$.

The catalyst components of the present disclosure form catalysts for the polymerization of alpha-olefins $CH_2=CHR$, wherein R is hydrogen or a hydrocarbon radical having 1-12 carbon atoms, by reaction with Al-alkyl compounds. The alkyl-Al compound can be of the formula $AlR_{3-z}X_z$ above, in which R is a C1-C15 hydrocarbon alkyl radical, X is halogen preferably chlorine and z is a number $0 \leq z < 3$. The Al-alkyl compound is preferably chosen among the trialkyl aluminum compounds such as for example trimethylaluminum, triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as $AlEt_2Cl$ and $Al_2Et_3Cl_3$ optionally in mixture with said trialkyl aluminum compounds.

The Al/Ti ratio is higher than 1 and is generally comprised between 50 and 2000.

It is possible to use in the polymerization system an electron donor compound (external donor) which can be the same or different from the compound that can be used as internal donor disclosed above. In case the internal donor is an ester of a polycarboxylic acid, in particular a phthalate, the external donor is preferably selected from the silane compounds containing at least a Si-OR link, having the formula $R_a^1R_b^2Si(OR^3)_c$, where a and b are integer from 0 to 2, c is an integer from 1 to 3 and the sum (a+b+c) is 4; $R^1$, $R^2$, and $R^3$, are alkyl, cycloalkyl or aryl radicals with 1-18 carbon atoms. Particularly preferred are the silicon compounds in which a is 1, b is 1, c is 2, at least one of $R^1$ and $R^2$ is selected from branched alkyl, cycloalkyl or aryl groups with 3-10 carbon atoms and $R^3$ is a $C_1$-$C_{10}$ alkyl group, in particular methyl. Examples of such preferred silicon compounds are methylcyclohexyldimethoxysilane, diphenyldimethoxysilane, methyl-t-butyldimethoxysilane, dicyclopentyldimethoxysilane, diisopropyldimethoxysilane. Moreover, are also preferred the silicon compounds in which a is 0, c is 3, $R^2$ is a branched alkyl or cycloalkyl group and $R^3$ is methyl. Examples of such preferred silicon compounds are cyclohexyltrimethoxysilane, t-butyltrimethoxysilane and thexyltrimethoxysilane.

Also the cyclic ethers such as tetrahydrofurane, and the 1,3 diethers having the previously described formula can be used as external donor.

As previously indicated the components of the present disclosure and catalysts obtained therefrom find applications in the processes for the (co)polymerization of olefins of formula $CH_2=CHR$ in which R is hydrogen or a hydrocarbon radical having 1-12 carbon atoms.

The catalysts of the present disclosure can be used in any of the olefin polymerization processes known in the art. They can be used for example in slurry polymerization using as diluent an inert hydrocarbon solvent or bulk polymerization using the liquid monomer (for example propylene) as a reaction medium. Moreover, they can also be used in the polymerization process carried out in gas-phase operating in one or more fluidized or mechanically agitated bed reactors.

The polymerization is generally carried out at temperature of from 20 to 120°C, preferably of from 40 to 80°C. When the polymerization is carried out in gas-phase the operating pressure is generally between 0.1 and 10 MPa, preferably between 1 and 5 MPa. In the bulk polymerization the operating pressure is generally between 1 and 6 MPa preferably between 1.5 and 4 MPa.

The catalysts of the present disclosure are very useful for preparing a broad range of polyolefin products. Specific examples of the olefinic polymers which can be prepared are: high density ethylene polymers (HDPE, having a density higher than 0.940 g/cc), comprising ethylene homopolymers and copolymers of ethylene with alpha-olefins having 3-12 carbon atoms; linear low density polyethylenes (LLDPE, having a density lower than 0.940 g/cc) and very low density and ultra low density (VLDPE and ULDPE, having a density lower than 0.920 g/cc, to 0.880 g/cc) consisting of copolymers of ethylene with one or more alpha-olefins having from 3 to 12 carbon atoms, having a mole content of units derived from the ethylene higher than 80%; isotactic polypropylenes and crystalline copolymers of propylene and ethylene and/or other alpha-olefins having a content of units derived from propylene higher than 85% by weight; copolymers of propylene and 1-butene having a content of units derived from 1-butene comprised between 1 and 40% by weight; heterophasic copolymers comprising a crystalline polypropylene matrix and an amorphous phase comprising copolymers of propylene with ethylene and or other alpha-olefins.

In particular, it has been noticed that the catalyst components obtained from the said adducts generate during polymerization polymer particles of smaller diameter which makes slurry process easier to be controlled. The following examples are given in order to further illustrate the invention without being intended as limiting it.

The following examples are given to further illustrate without limiting in any way the present disclosure itself.

General procedure for the preparation of the solid catalyst component

Into a 11 steel reactor provided with stirrer, 800cm$^3$ of TiCl$_4$ at 0°C were introduced; at room temperature and whilst stirring 16 g of the adduct were introduced together with an amount of diisobutylphthalate (DIBP) as internal donor so as to give a donor/Mg molar ratio of 10. The whole was heated to 100°C over 90 minutes and these conditions were maintained over 120 minutes. The stirring was stopped and after 30 minutes the liquid phase was separated from the settled solid maintaining the temperature at 100°C. Two further treatments of the solid were carried out adding 750 cm$^3$ of TiCl$_4$ and heating the mixture at 120°C over 10 min. and maintaining said conditions for 60 min under stirring conditions (500 rpm). The stirring was then discontinued and after 30 minutes the liquid phase was separated from the settled solid maintaining the temperature at 120°C. Thereafter, 3 washings with 500 cm$^3$ of anhydrous hexane at 60°C and 3 washings with 500 cm$^3$ of anhydrous hexane at room temperature were carried out. The solid catalyst component obtained was then dried under vacuum in nitrogen environment at a temperature ranging from 40-45°C.

General procedure for the propylene polymerization test

A 4 litre steel autoclave equipped with a stirrer, pressure gauge, thermometer, catalyst feeding system, monomer feeding lines and thermostatting jacket, was used.

The reactor was charged with 0.01 gr. of solid catalyst component 0,76 g of TEAL, 0.076g of dicyclopentyldimetoxy silane, 3.2 1 of propylene, and 1.5 1 of hydrogen. The system was heated to 70°C over 10 min. under stirring, and maintained under these conditions for 120 min. At the end of the polymerization, the polymer was recovered by removing any unreacted monomers and was dried under vacuum.

Average Particle Size and particle size distribution of the adduct and polymers

Determined by a method based on the principle of the optical diffraction of monochromatic laser light with the "Malvern Instr. 2600" apparatus. The average size is given as P50.

## EXAMPLES

**Comparative Example 1 and invention Examples 2-3**

A molten adduct of formula $MgCl_2$ - 2.7 EtOH and a white mineral oil OB55 marketed by ROL OIL are introduced into a Couvette device (examples 2, 3)or a stirred tank (comparative 1). After the emulsifying stage the emulsion is transferred, via the transfer pipe to a cooling bath containing cold hexane from which solid adduct particles are collected.

The characteristics of the shear generating devices are reported below:

|  | Stirred Tank Comp. 1 | Couette Ex. 2 | Couette Ex. 3 |
|---|---|---|---|
| **Impeller Diameter, mm** | 67 | - | - |
| **Rotor Diameter, mm** | - | 96.2 | 96.2 |
| **Radial tolerance, mm** | - | 0.6 | 2 |

The table below reports the working conditions used to generate the solid adduct particles. It is apparent that the examples of the invention are able to generate solid adduct particles with a narrower particle size distribution (SPAN).

| Example |  | Stirred Tank Comp.1 | Couette Ex. 2 | Couette Ex. 3 |
|---|---|---|---|---|
| **Rpm** |  | 1100 | 1150 | 1400 |
| **Re in transf. tube** | - | 1100 | 990 | 920 |
| **Continuous/dispersed phases** | wt/wt | 7 | 6 | 6 |
| **P5** | micron | 16,2 | 30,2 | 28,59 |
| **P50** | micron | 52,5 | 53,4 | 54,34 |
| **P95** | micron | 111,6 | 92,8 | 100,24 |
| **P99** | micron | 133,6 | 108,6 | 117,93 |
| **Span** | - | 1,41 | 0,92 | 1,04 |

**Example 4 and Comparative Example 2**

In preparing the adduct of Example 4 the same Couette device used in Example 2 was used while the same apparatus used in Comp. example 1 was used in Comparative example 2. However, the working conditions have been modified in order to produce an adduct having a smaller P50 size. With the same P50 the process of the invention generates a much narrower particle size distribution.

| Example |  | Comp. 2 | Example 4 |
|---|---|---|---|
| **Rpm** |  | 1550 | 1400 |

(continued)

| Example | | Comp. 2 | Example 4 |
|---|---|---|---|
| Re in transf. tube | - | 1000 | 990 |
| Continuos/dispersed phases | wt/wt | 6 | 6 |
| P5 | micron | 17,9 | 20,8 |
| P50 | micron | 43,7 | 43,2 |
| P95 | micron | 96,3 | 86,1 |
| P99 | micron | 116,3 | 105,2 |
| Span | - | 1,4 | 1,19 |

**Example 5 -**

A molten adduct of formula MgCl$_2$-3.3 EtOH and a white mineral oil OB55 marketed by ROL OIL are introduced into the same Couette device as that of Example 2. The mixture, at a temperature of 125°C, is processed under the conditions reported below and then collected after the cooling stage obtaining solid particles with a very narrow particle size distribution.

| | | Ex 5 |
|---|---|---|
| Emulsion Device type | | Couette of Ex. 2 |
| Rpm | | 900 |
| Re in ED | - | 300 |
| Shear rate in ED | s^-1 | 7600 |
| Re in transf. tube | - | 780 |
| Continuos/dispersed phases | wt/wt | 7.2 |
| P1 | micron | 24.1 |
| P5 | micron | 28.6 |
| P50 | micron | 46.5 |
| P95 | micron | 74.5 |
| P99 | micron | 86.8 |
| Span | - | 0.78 |

**Polymerization Examples**

The adducts generated in comparative example 1 and Example 3 have been converted into catalyst components according to the general previously described. The so obtained catalysts components have been tested according to the general polymerization procedure thereby obtaining the below reported results. As it can be seen, the narrower particle size distribution of the support obtained with the process of the invention is reflected on the polymer particles.

| Polymer from support of Example | | Comp. 1 | Ex. 3 |
|---|---|---|---|
| Polymer APS | micron | 2255 | 1872 |
| >4000 | | 5,2 | 0,5 |
| 3350 | | 6,6 | 2,7 |
| 2800 | | 11,0 | 7,3 |
| 2000 | | 40,9 | 34,3 |

(continued)

| Polymer from support of Example | | Comp. 1 | Ex. 3 |
|---|---|---|---|
| 1400 | | 21,1 | 27,1 |
| 1000 | | 4,9 | 14,1 |
| 710 | | 1,9 | 7,6 |
| 500 | | 2,8 | 3,4 |
| <500 | | 5,6 | 3,0 |
| Breaks | | 4,6 | 3,3 |

## Claims

1. Process for preparing a $MgCl_2$-alcohol adduct comprises, (a) forming a mixture of an $MgCl_2$-alcohol adduct in molten form and a liquid which is immiscible with the said adduct, (b) subjecting the mixture to a shear stress in order to obtain an emulsion, and (c) rapidly cooling the emulsion to solidify the disperse phase and collecting the solid adduct particles, said process being **characterized by** the fact that step (b) is carried out with an apparatus comprising two concentric cylinders rotating at different angular velocities which is a Couette device comprising a first outer and second inner cylindrical member that define an annulus between them, wherein at least one of said cylindrical members rotates with respect to the other.

2. The process according to claim 1 **characterized in that** the first outer cylinder is stationery while the second internal cylinder is the rotary one.

3. The process according to claim 1 in which radial tolerance between the surfaces of the cylinders, intended as the radial difference between the circumference of each cylinder ranges from 0.1 up to 20 mm, while the rotor diameter ranges from 20 mm up to 600 mm.

4. The process according to claim 1 in which the rotary cylinder is preferably rotated at a velocity in the range from 200 to 8000 rpm.

5. The process according to claim 1 in which liquid immiscible with the adduct is selected from the group consisting of aliphatic and aromatic hydrocarbons and silicone oils or mixture thereof.

6. The process according to claim 5 in which said liquid has a viscosity ranging from 22 and 270cPoise at room temperature.

7. The process according to claim 1 in which the adduct has formula $MgCl_2 \cdot mROH \cdot nH_2O$ in which m ranges from 0.1 to 6, n ranges from 0 to 0.7 and R is an alkyl group containing from 1 to 10 carbon atoms.

8. The process according to claim 7 in which R is ethyl.

9. The process according to claim 1 in which the viscosity of the adduct ranges from 20 to 200cP at 125°C.

10. The process according to claim 1 in which relative feeding weight ratio of liquid immiscible medium to molten adduct ranges from 3.5 to 8.


## Patentansprüche

1. Verfahren zur Herstellung eines $MgCl_2$-Alkohol-Addukts, umfassend (a) Bilden einer Mischung aus einem $MgCl_2$-Alkohol-Addukt in geschmolzener Form und einer Flüssigkeit, die mit dem Addukt unmischbar ist, (b) Aussetzen der Mischung einer Scherbeanspruchung, um eine Emulsion zu erhalten, und (c) rasches Kühlen der Emulsion, um die dispergierte Phase zu verfestigen und die festen Adduktpartikel aufzufangen, wobei das Verfahren durch die Tatsache gekennzeichnet ist, dass Schritt (b) mit einem Apparat durchgeführt wird, der zwei konzentrische Zylinder umfasst, die mit unterschiedlichen Winkelgeschwindigkeiten rotieren, welcher eine Couette-Vorrichtung ist, die ein erstes äußeres und ein zweites inneres zylindrisches Element umfasst, die einen Ringraum zwischen ihnen definieren, wobei mindestens eines der zylindrischen Elemente in Bezug zu dem anderen rotiert.

2. Verfahren nach Anspruch 1, **dadurch gekennzeichnet, dass** der erste äußere Zylinder stationär ist, während der zweite innere Zylinder der rotierende Zylinder ist.

3. Verfahren nach Anspruch 1, wobei die radiale Toleranz zwischen den Oberflächen der Zylinder, die als radiale Differenz zwischen dem Umfang jedes Zylinders vorgesehen ist, in Bereichen von 0,1 bis zu 20 mm liegt, während der Rotordurchmesser im Bereich von 20 mm bis 600 mm liegt.

4. Verfahren nach Anspruch 1, wobei der rotierende Zylinder vorzugsweise mit einer Geschwindigkeit im Bereich von 200 bis 8000 UpM rotiert.

5. Verfahren nach Anspruch 1, wobei Flüssigkeit, die mit dem Addukt unmischbar ist, ausgewählt ist aus der Gruppe bestehend aus aliphatischen und aromatischen Kohlenwasserstoffen und Silikonölen oder Mischung davon.

6. Verfahren nach Anspruch 5, wobei die Flüssigkeit eine Viskosität im Bereich von 22 bis 270 cPoise bei Raumtemperatur hat.

7. Verfahren nach Anspruch 1, wobei das Addukt die Formel $MgCl_2 \cdot mROH \cdot nH_2O$ hat, in der m im Bereich von 0,1 bis 6 liegt, n im Bereich von 0 bis 0,7 liegt, und R eine Alkylgruppe ist, die 1 bis 10 Kohlenstoffatome enthält.

8. Verfahren nach Anspruch 7, wobei R Ethyl ist.

9. Verfahren nach Anspruch 1, wobei die Viskosität des Addukts bei 125 °C im Bereich von 20 bis 200 cP liegt.

10. Verfahren nach Anspruch 1, wobei das relative Zuführgewichtverhältnis von flüssigem unmischbarem Medium zu geschmolzenem Addukt im Bereich von 3,5 bis 8 liegt.


## Revendications

1. Procédé de préparation d'un adduit $MgCl_2$-alcool comprenant (a) la formation d'un mélange d'un adduit $MgCl_2$-alcool sous forme fondue et d'un liquide non miscible avec ledit produit d'addition, (b) la soumission du mélange à une contrainte de cisaillement afin d'obtenir une émulsion et (c) le refroidissement rapide de l'émulsion pour solidifier la phase dispersée et la collecte des particules d'adduit solides, ledit procédé étant **caractérisé par le fait que** l'étape (b) est réalisée à l'aide d'un appareil comprenant deux cylindres concentriques tournant à des vitesses angulaires différentes qui est un dispositif de Couette comprenant un premier élément cylindrique externe et un deuxième élément cylindrique interne qui définissent un espace annulaire entre eux, au moins l'un desdits éléments cylindriques tournant par rapport à l'autre.

2. Procédé selon la revendication 1, **caractérisé en ce que** le premier cylindre externe est stationnaire tandis que le deuxième cylindre interne est le cylindre rotatif.

3. Procédé selon la revendication 1, dans lequel la tolérance radiale entre les surfaces des cylindres, qui est la différence radiale entre la circonférence de chaque cylindre, est située dans la plage de 0,1 à 20 mm, tandis que le diamètre du rotor est situé dans la plage de 20 mm à 600 mm.

4. Procédé selon la revendication 1, dans lequel le cylindre rotatif est préférablement mis en rotation à une vitesse dans la plage de 200 à 8000 tr/min.

5. Procédé selon la revendication 1, dans lequel le liquide non miscible avec le produit d'addition est choisi dans le groupe constitué par les hydrocarbures aliphatiques et aromatiques et les huiles de silicone ou un mélange de ceux-ci.

6. Procédé selon la revendication 5, dans lequel ledit liquide présente une viscosité située dans la plage de 22 à 270 cPoises à température ambiante.

7. Procédé selon la revendication 1, dans lequel le produit d'addition présente la formule $MgCl_2 \cdot mROH \cdot nH_2O$, dans laquelle m est situé dans la plage de 0,1 à 6, n est situé dans la plage de 0 à 0,7 et R représente un groupe alkyle contenant 1 à 10 atomes de carbone.

8. Procédé selon la revendication 7, dans lequel R représente éthyle.

9. Procédé selon la revendication 1, dans lequel la viscosité du produit d'addition est située dans la plage de 20 à 200 cP à 125°C.

10. Procédé selon la revendication 1, dans lequel le rapport pondéral relatif d'alimentation du milieu liquide non miscible au produit d'addition fondu est situé dans la plage de 3,5 à 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005039745 A
- US 7581436 B
- US 2009188304 A
- US 6959588 B
- US 5959194 A

- EP 395083 A
- EP 553805 A
- EP 553806 A
- EP 601525 A
- WO 9844009 A

**Non-patent literature cited in the description**

- **GRACE.** *Chemical Engineering Communications,* vol. 14, 225-277

- *Rheology of emulsions - Derkach SR.- Adv Colloid Interface Sci.,* 30 October 2009, vol. 151 (1-2), 1-23